# EUROPÄISCHE PATENTSCHRIFT

(11) **EP 0 816 173 B1**
(45) Veröffentlichungstag und Bekanntmachung des Hinweises auf die Patenterteilung: **14.11.2001**
(21) Anmeldenummer: 97110981.4
(22) Anmeldetag: 02.07.1997
(51) Int. Cl.: B60R 11/02, G07C 7/00, G01P 1/12, H05K 5/00

(54) **Kraftfahrzeug-Registriergerät mit einer Schublade**
Recording device for a vehicle,with a drawer
Appareil enregistreur pour véhicule avec tiroir

(30) Priorität: 06.07.1996 DE 29611853 U
(43) Veröffentlichungstag der Anmeldung: 07.01.1998
(73) Patentinhaber: Mannesmann VDO AG, 60326 Frankfurt (DE)
(72) Erfinder: Burkart, Harald, Dipl.-Ing. (FH), 78054 Villingen-Schwenningen (DE)

(56) Entgegenhaltungen:
- EP-A- 0 709 683
- DE-A- 2 342 426
- FR-A- 2 718 282
- US-A- 4 732 430
- US-A- 5 199 777
- US-A- 5 211 461

## Beschreibung

Die Erfindung betrifft ein Kraftfahrzeug-Registriergerät mit einer Schublade zur Aufnahme von Aufzeichnungsträgern, wobei die Schublade mit einer abnehmbaren, spritzgießtechnisch hergestellten Frontwand ausgerüstet ist.

Das gattungsgemäße Bauteil hat in erster Linie die Aufgabe, einen relativ hohen und sich weitgehend über die gesamte Breite des Gerätes erstreckenden, für die Bewegung der gegebenenfalls mit hochbauenden Funktionselementen des Registriergerätes beladenen Schublade erforderlichen Spalt an der Frontseite des Registriergerätes bei geschlossener Schublade abzudecken. Eine derartige als Blende dienende Frontwand einer Schublade sollte verständlicherweise auch den ästhetischen Belangen an der Frontseite eines Registriergerätes gerecht werden, wobei sie ohne Nacharbeiten, insbesondere ohne Lackieren, spritzgießtechnisch aus Kunststoff hergestellt werden sollte, um dem im Kraftfahrzeug-Instrumentenmarkt großserienbedingt herrschenden Konstenniveau zu entsprechen. Dies bedeutet, daß einerseits ein gefüllter Kunststoff für die Frontwand nicht verwendbar ist, andererseits die Frontwand, um frontseitig sichtbare Einfallstellen zu vermeiden, relativ dünnwandig ausgebildet werden muß. Demgegenüber kann und muß der in dem Registriergerät geführte Schlitten der Schublade wegen der erforderlichen Steifigkeit aus beispielsweise einem glasfaserverstärkten Kunststoff hergestellt sein, das heißt, die Frontwand muß nicht nur kundenspezifischer Belange wegen austauschbar gestaltet sein, sondern auch aufgrund technischer Anforderungen. Da die Frontwand außerdem als Griffleiste zur Handhabung der Schublade dient, wobei im Kraftfahrzeug bekanntlich relativ hohe Temperaturen auftreten, andererseits die Verbindung der Frontwand mit dem Schlitten der Schublade gegebenenfalls nur an zwei entgegengesetzten Stellen im Randbereich der Schublade möglich ist, sind in dem vorgesehenen Einsatzmilieu qualitätsmindernde Verformungen und Labilitäten zu erwarten.

Die Aufgabe der vorliegenden Erfindung bestand somit darin, die Frontwand so zu gestalten, daß sie sowohl den ästhetischen Belangen als auch den Festigkeitsanforderungen gerecht wird und mit einem möglichst geringen Fertigungsaufwand herstellbar ist.

Die Lösung der Aufgabe geht aus dem Anspruch 1 hervor. Vorteilhafte Ausgestaltungen des Anmeldungsgegenstandes sind in den Unteransprüchen beschrieben.

Die Erfindung bietet den Vorteil, daß die geschilderten, sich widersprechenden Forderungen durch bauliche Maßnahmen, und zwar in einer für die Großserienfertigung geeigneten Weise erfüllt werden. Dabei läßt sich der Grad der angestrebten Versteifung in weiten Grenzen wählen und, was besonders vorteilhaft ist, der Zusammenbau der Frontwand unter Anwendung eines Mehrkomponenten-Spritzgießverfahrens ausschließlich spritzgießtechnisch realisieren. Erwähnenswert ist ferner, daß die Frontwand mit dem Schlitten der Schublade ausschließlich steckbar verbindbar ist, wobei die gewählten Verbindungsmittel eine exakte und gut reproduzierbare Positionierung der Frontwand bei deren Montage ermöglichen, eine hohe Befestigungssicherheit bieten und in Form der versenkt angeordneten, mit Zapfen zusammenwirkenden Zungen in ihrer Gesamtheit auch eine Plombierfunktion ausüben.

Im folgenden sei die Erfindung anhand von Zeichnungen näher erläutert:
Es zeigen:
- Figur 1: eine Frontansicht eines als Ausführungsbeispiel gewählten Fahrtschreibers, in welchem als Aufzeichnungsträger Diagrammscheiben verwendet werden,
- Figur 2: eine teilweise Seitenansicht des Fahrtschreibers mit geöffneter Schublade sowie einen zwischen einer Schnittebene A und einer Schnittebene B (Figur 3) springenden Teilschnitt,
- Figur 3: eine teilweise dargestellte Draufsicht der Schublade mit eingelegter Diagrammscheibe und teildargestellter Frontwand,
- Figur 4: eine Perspektivdarstellung der Frontwand.

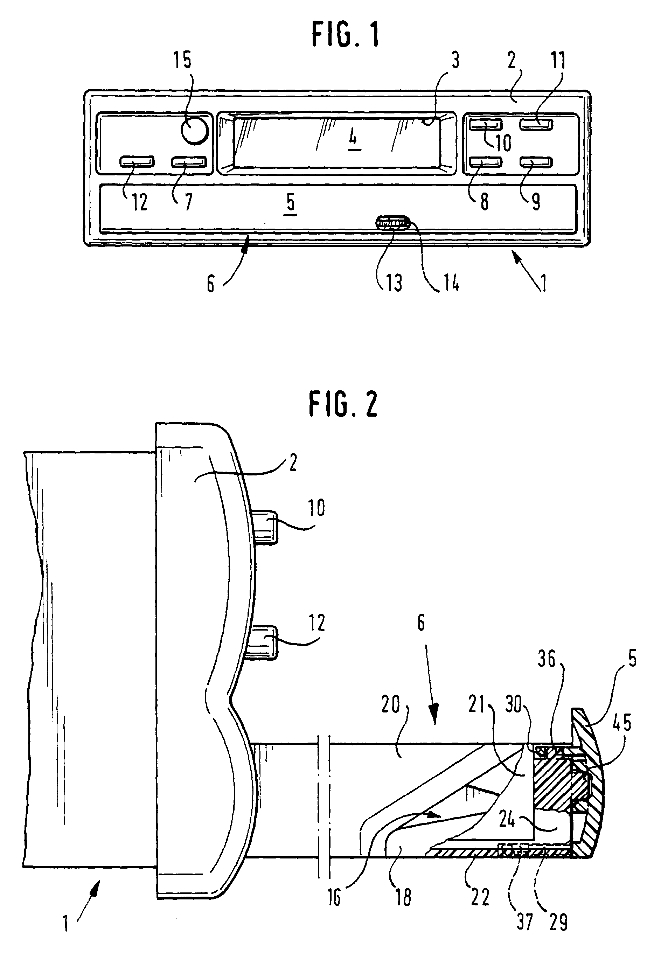

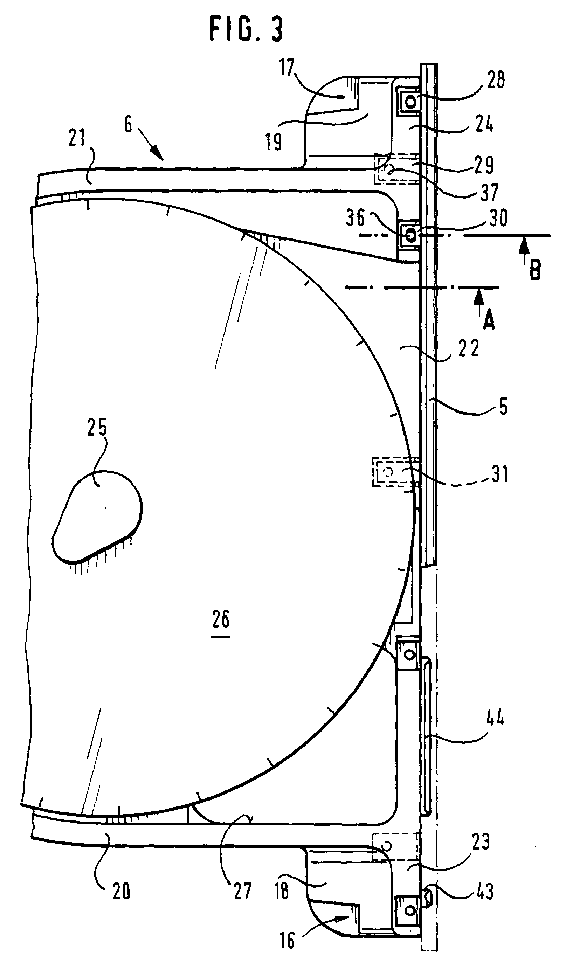

Der dargestellte Fahrtschreiber weist ein quaderförmiges Gehäuse 1 auf, an dessen frontseitiger Stirnwand 2 ein Fensterausschnitt 3 für ein dem Fahrtschreiber frontseitig zugeordnetes Display 4 ausgebildet ist. Mit 5 ist eine Frontwand einer in dem Gehäuse 1 geführten Schublade 6 bezeichnet. Von in der Stirnwand 2 gelagerten Tasten 7, 8, 9, 10, 11 und 12 sind die Tasten 7 und 8 sowie die als Menütaste bezeichnete Taste 9 dem Fahrer beziehungsweise dem Beifahrer zum Anwählen wenigstens der wichtigsten Arbeitszeitdaten zugeordnet. Die Tasten 10 und 11 dienen dem Vor- und Rückwärtsblättern in den jeweils angewählten Datensätzen, die Taste 12 ist für das Freigeben der Schublade 6 vorgesehen. Ferner zeigt die Figur 1, daß in der Frontwand 5 der Schublade 6 ein Fenster 13 vorgesehen ist, durch welches eine stirnseitig mit einer geeigneten Markierung versehene Scheibe 14 sichtbar ist, die der Laufanzeige des in dem Fahrtschreiber befindlichen Uhrwerkes dient. Mittels einer mit 15 bezeichneten Plombe ist der Zugang zu einer Diagnosebuchse gesichert. Der Vollständigkeit halber sei erwähnt, daß, wie auch aus der Figur 2 ersichtlich ist, der dargestellte Fahrtschreiber als Einbaugerät ausgebildet ist und der Schublade 6, die in Figur 2 in ihrer geöffneten Stellung dargestellt ist, im Gehäuse 1 geeignete Führungsschienen zugeordnet sind. Bei geschlossener Schublade 6 greifen diese Führungsschienen zusätzlich in Schlitze 16, 17 ein, welche in an der Schublade 6 angeformten Ansätzen 18, 19 (Figur 3) ausgebildet sind. Mit 20 und 21 sind Seitenwände der Schublade 6 bzw. des nicht näher bezeichneten Schlittens der Schublade 6 bezeichnet und 22 stellt einen zur Versteifung in geeigneter Weise mit Rippen versehenen Boden der Schublade 6 dar. 23 und 24 sind frontseitige Wandeemente des Schlittens, die der Befestigung der Frontwand 5 dienen. Das nicht dargestellte Uhrwerk des Fahrtschreibers, zumindest ein großer Teil der Zahnräder des Uhrwerkes, sind dem Boden 22 des Schlittens der Schublade 6 so flach wie möglich zugeordnet und dienen dem uhrzeitrichtigen Antrieb einer Diagrammscheibenauflage, an welcher ein Zentrier- und Mitnahmedorn 25 angeformt ist. Mit 26 ist eine vereinfacht dargestellte, vom Zentrier- und Mitnahmedorn 25 aufgenommene Diagrammscheibe bezeichnet. Ein im Boden 22 ausgebildeter Durchbruch 27 dient dem leichteren Entnehmen einer eingelegten Diagrammscheibe 26 aus der Schublade 6.

Insbesondere aus der Figur 3 ist ersichtlich, daß die Frontwand 5 eine statische Funktion an der Schublade 6 ausübt und ausüben muß, weil, wie aus der Figur 3 ersichtlich ist, der Schlitten der Schublade 6 frontseitig aus Gründen der Raumnutzung keine durchgehende Frontwand aufweist. Die Befestigung der Frontwand 5 erfolgt mittels an ihrer Rückseite ausgebildeter, federnder Zungen 28 bis 34. Die Zungen 28 bis 34 sind jeweils mit einem Langloch versehen, von denen eines mit 35 bezeichnet ist. Den Langlöchern 35 sind schlittenseitig ausgebildete Zapfen zugeordnet, wobei die Zapfen, wie aus Figur 2 ersichtlich ist, sozusagen versenkt ausgebildet sind, mit anderen Worten lediglich in den Zungen 28 bis 34 zugeordneten, nicht näher bezeichneten Freisenkungen im Boden 22 und in den frontseitigen Wandelementen 23, 24 hineinragen. In Figur 2 sind zwei der Zapfen mit 36 und 37 bezeichnet. In diesem Zusammenhang sei noch erwähnt, daß an den Zungen 28 bis 34 stirnseitig jeweils eine schiefe Ebene zur Erleichterung der Montage der Frontwand 5 ausgebildet ist. Eine dieser Flächen ist mit 38 bezeichnet.

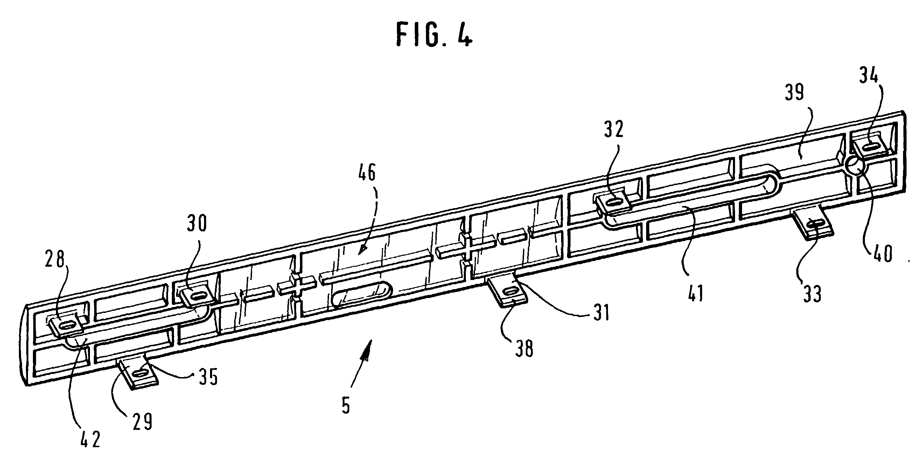

Wie aus der Figur 4 ersichtlich ist, ist an der Rückseite der Frontwand 5 durch Ausformen von im einzelnen nicht bezeichneten Rippen eine gekammerte Struktur ausgebildet. Eine der Kammern ist mit 39 bezeichnet. Ferner sind rückseitig ein Sackloch 40 sowie Nute 41 und 42 ausgeformt. Diese Elemente dienen dem exakten Ausrichten der Frontwand 5 am Schlitten der Schublade 6, wobei dem Sackloch 40 ein am Wandelement 23 ausgebildeter Zapfen 43 und den Nuten 41, 42 geeignete Stege 44 und 45 zugeordnet sind, von denen einer, 44, ebenfalls am Wandelement 23, der andere, 45 am Wandelement 24 des Schlittens angeformt ist. Wie aus der Figur 4 ferner hervorgeht, sind einige Kammern, von denen eine mit 46 bezeichnet ist, ausgefüllt und zwar mit einem thermoplastischen Material, welches in einem zweiten Arbeitsgang des angewendeten Mehrkomponenten-Spritzgießverfahrens zugeführt wird. Mit dieser Maßnahme wird eine partielle Versteifung der Frontwand 5 erzielt. Zweckmäßigerweise wird für die Frontwand 5 ein Polycarbonat verwendet und das Ausfüllen der Kammern wegen der innigeren Bindung mit dem Vorspritzling durch Anschmelzen mit dem gleichen Material vorgenommen. Beim beschriebenen Ausführungsbeispiel wird für das nachgespritzte Material eine farblose Komponente verwendet, so daß auf diese Weise das Glas im Fenster 13 realisiert, erforderlichenfalls auch eine Lupenfunktion ausgeformt werden kann. Der Vollständigkeit halber sei noch erwähnt, daß bei den für das Vergießen vorgesehenen Kammern die die Kammern trennenden Rippen unterbrochen ausgebildet sind. Damit wird eine bessere Verzahnung der nachgespritzten Masse mit dem Vorspritzling erzielt. Eine Verbesserung der mechanische Verankerung durch Anschrumpfen der nachgespritzten Masse läßt sich außerdem durch ein oder mehrere in den Kammern ausgebildete, der Einfachheit halber nicht dargestellte Zapfen erzielen.

## Patentansprüche

1. Kraftfahrzeug-Registriergerät mit einer Schublade (6) zur Aufnahme von Aufzeichnungsträgern, wobei die Schublade mit einer abnehmbaren spritzgießtechnisch hergestellten Frontwand (5) ausgerüstet ist,
**dadurch gekennzeichnet,**
**daß** an der in bezug auf die Schublade (6) nach innen weisenden Seite der Frontwand (5) durch Anbringen von Rippen eine gekammerte Struktur ausgeformt ist und
**daß** wenigstens einige Kammern (39) mit einem thermoplastischen Kunststoff ausgefüllt sind.

2. Kraftfahrzeug-Registriergerät nach Anspruch 1,
**dadurch gekennzeichnet,**
**daß** an der strukturierten Seite der Frontwand (5) in zwei parallelen Ebenen mehrere, mit Bohrungen versehene Zungen (28 bis 34) federungsfähig angeformt sind.

3. Kraftfahrzeug-Registriergerät nach Anspruch 2,
**dadurch gekennzeichnet,**
**daß** die Zungen (28 bis 34) wechselständig an der Frontwand (5 ) angeformt sind.

4. Kraftfahrzeug-Registriergerät nach Anspruch 2,
**dadurch gekennzeichnet,**
**daß** an der strukturierten Seite ein Sackloch (40) und in den Zungen (28 bis 34) jeweils ein sich quer zur Achse des Sacklochs (40) erstreckendes Langloch (35) ausgeformt sind.

5. Kraftfahrzeug-Registriergerät nach Anspruch 1,
**dadurch gekennzeichnet,**
**daß** innerhalb der Kammern (39) Zapfen ausgebildet sind.

6. Kraftfahrzeug-Registriergerät nach Anspruch 1,
**dadurch gekennzeichnet,**
**daß** die Frontwand (5) unter Anwendung eines Mehrkomponenten-Spritzgießverfahrens hergestellt ist.

## Claims

1. Motor-vehicle recording instrument with a drawer (6) for receiving recording media, the drawer being provided with a removable injection-moulded front wall (5), **characterized in that** a compartmentalized structure is formed on the side of the front wall (5) facing inwards, with respect to the drawer (6), by attaching ribs, and **in that** at least some compartments (39) are filled with a thermoplastic material.

2. Motor-vehicle recording instrument according to Claim 1, **characterized in that** a plurality of tongues (28 to 34) provided with bores are formed resiliently in two parallel planes on the structured side of the front wall (5).

3. Motor-vehicle recording instrument according to Claim 2, **characterized in that** the tongues (28 to 34) are formed in an alternating arrangement on the front wall (5).

4. Motor-vehicle recording instrument according to Claim 2, **characterized in that** a blind hole (40) is formed on the structured side and an elongated hole (35), extending transversely in relation to the axis of the blind hole (40), is respectively formed in the tongues (28 to 34).

5. Motor-vehicle recording instrument according to Claim 1, **characterized in that** pins are formed within the compartments (39).

6. Motor-vehicle recording instrument according to Claim 1, **characterized in that** the front wall (5) is produced by using a multi-component injection-moulding process.

## Revendications

1. Appareil enregistreur pour véhicule automobile avec un tiroir (6) pour le logement de supports d'enregistrement, ledit tiroir (6) étant équipé d'un panneau frontal (5) amovible fabriqué selon le procédé de moulage par injection,
**caractérisé par le fait**
**que** sur la face du panneau frontal (5) dirigée, par rapport au tiroir (6), vers l'intérieur est réalisée une structure alvéolaire par intercalation de nervures et qu'au moins quelques-unes des alvéoles (39) sont remplies d'une matière thermoplastique.

2. Appareil enregistreur pour véhicule automobile selon la revendication 1,
**caractérisé par le fait**
**que**, sur la face structurée du panneau frontal (5) sont formées, avec élasticité, dans deux plans parallèles, plusieurs languettes (28 à 34) pourvues d'alésages.

3. Appareil enregistreur pour véhicule automobile selon la revendication 2,
**caractérisé par le fait**
**que** les languettes (28 à 34) sont formées en quinconce sur le panneau frontal (5).

4. Appareil enregistreur pour véhicule automobile selon la revendication 2,
**caractérisé par le fait**
**que** sur la face structurée est pratiqué un trou borgne (40) et dans les languettes (28 à 34) respectivement un trou oblong (35) s'étendant transversalement à l'axe dudit trou borgne (40).

5. Appareil enregistreur pour véhicule automobile selon la revendication 1,
**caractérisé par le fait**
**qu'**à l'intérieur des alvéoles (39) sont formés des tenons.

6. Appareil enregistreur pour véhicule automobile selon la revendication 1,
**caractérisé par le fait**
**que** le panneau frontal (5) est fabriqué selon un procédé de moulage par injection à plusieurs constituants.
